(19) Europäisches Patentamt
European Patent Office
Office européen des brevets

(11) EP 1 253 163 B1

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
***C08G 64/20*** *(2006.01)* ***B01J 19/20*** *(2006.01)*

(21) Anmeldenummer: **02008197.2**

(22) Anmeldetag: **17.04.2002**

(54) **Verfahren zur kontinuierlichen Herstellung von Polycarbonaten nach dem Schmelzumesterungsverfahren**

Process for continuously preparing polycarbonates by transesterification

Procédé pour la préparation en continu de polycarbonates par transestérification

(84) Benannte Vertragsstaaten:
**AT BE CH CY DE DK ES FI FR GB GR IE IT LI LU MC NL PT SE TR**

(30) Priorität: **24.04.2001 DE 10119851**

(43) Veröffentlichungstag der Anmeldung:
**30.10.2002 Patentblatt 2002/44**

(73) Patentinhaber: **Bayer MaterialScience AG**
**51368 Leverkusen (DE)**

(72) Erfinder:
- **Hucks, Uwe**
  **46519 Alpen (DE)**
- **König, Thomas**
  **51375 Leverkusen (DE)**
- **Kratschmer, Silke**
  **47829 Krefeld (DE)**
- **Schulz van Endert, Eike**
  **13467 Berlin (DE)**
- **Schröder, Klaus**
  **13509 Berlin (DE)**
- **Hoffmann, Hans-Peter**
  **16727 Velten (DE)**

(56) Entgegenhaltungen:
**DE-A- 4 447 422** **GB-A- 1 435 767**
**US-A- 3 684 458**

- **KUNSTSTOFFE., Bd. 82, Nr. 1, 1992, Seiten 17-20, XP001074296 MUENCHEN, DE ISSN: 0023-5563**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur kontinuierlichen Herstellung von Polycarbonaten aus Oligocarbonaten nach dem Schmelzumesterungsverfahren unter Verwendung eines speziellen Reaktors.

Oligocarbonate werden durch Umesterung von Diarylcarbonaten mit Diphenolen in Gegenwart von Katalysatoren hergestellt. In den Anmeldungen DE-A-1 031 512, US-3 022 272, US-5 340 905, US-5 399 659, DE-A 4 312 390, US 5 912 318, US 5 932 683, US 5 912 289, WO 00/26 276 und EP-A 620 240 werden Verfahren zur Herstellung von Polycarbonaten beschrieben, in denen sind auch die Herstellung der Zwischenstufen, der Oligocarbonate, dargestellt sind. In der deutschen Anmeldung mit der Anmeldenummer 1 01 14 808.9 ist direkt ein Verfahren zur Herstellung von Oligocarbonaten beschrieben. Weitere Einzelheiten des Schmelzeumesterungsverfahrens im allgemeinen sind in der Literatur angegeben (siehe beispielsweise Hermann Schnell, Chemistry and Physics of Polycarbonates, Polymer Reviews, Vol. 9, 1964, Seiten 44 bis 51).

Für die Polykondensation der Oligocarbonate sind verschiedene Vorrichtungen beschrieben.

In der DE-A 1 495 730 (Farbenfabriken Bayer AG) wird eine wendelförmige Spirale für einen horizontalen Zylinder oder ein horizontales Reaktionsrohr vorgeschlagen, welche die Schmelze an der Reaktorwand ausstreicht und fördert. Nachteilig ist, dass wegen der Gravitation die oberen Gehäusewandungen nur unvollständig benetzt werden und es deshalb zu Produktschädigungen kommt. Eine stabile Konstruktion der Spiralen ist für großtechnische Anlagen sehr zweifelhaft.

Die EP-A 0 711 597 (Hoechst Celanese Corporation und Hoechst AG) schlägt als Reaktorvorrichtung für Polyester einen liegenden Zylinder mit einem sich darin drehenden Rührer vor, der keine Mittelachse besitzt. Die tragenden Verbindungselemente befinden sich am äußeren Umfang des Rührers. Nachteilig ist hier die äußere tragende Konstruktion, weil dadurch Filmbrücken entstehen, die mit den Filmen auf den Rührblättern abgeschlossene Räume bilden können und dann einen optimalen Abtransport des abgespaltenen Monomers und anderer Produkte beeinträchtigen. Weiter ist die effektive Behandlung höher viskoser Schmelzen gestört, weil durch die immer dicker werdenden Belegungen mit Schmelze das Verhältnis Filmoberfläche zu Schmelzevolumen deutlich gemindert und verschlechtert wird.

Die EP-A 0 778 078 (Teijin Limited) beschreibt einen zweiwelligen Reaktor für die Polykondensation. Hier sind die Reaktionsräume eng und die Fertigung wegen der engen Spiele schwierig. Deshalb sind die Baugrößen begrenzt und für hohe Durchsätze nicht geeignet. Weiter wird über den Antrieb Energie eingetragen, was zu unerwünschten Temperaturerhöhungen führt.

Die US 5,932,683 (Asahi Kasei Kogyo Kabushiki Kaisha) beschreibt eine Reaktorvorrichtung, bei der die Oligocarbonatschmelze über eine Lochplatte auf viele senkrecht angebrachte Drähte verteilt wird und an diesen in den Sumpf hinunterläuft. In Beispiel 1 werden für 5 kg Prepolymer pro Stunde bereits 50 Drähte mit 8 m Länge benötigt. Es ist einsichtig, dass das sehr aufwendige, großtechnisch wohl nur schwer zu realisierende Konstruktionen sind. Zur Unterstützung des Reaktionsfortschritts wird neben dem Vakuum noch Stickstoff eingesetzt, der danach in aufwendigen Operationen vom Phenol befreit werden muss.

In der US 5,767,224 (Bayer AG) wird für die Polykondensation von Oligocarbonaten ein Reaktor mit kinematischer Selbstreinigung vorgeschlagen. Dieser Reaktor ist in der EP A 460 466, EP A 528 210 und EP A 638 354 beschrieben. Für hohe Durchsätze bei großtechnischen Anlagen ist diese Konstruktion sehr aufwendig und wegen der engen Spiele in der Baugröße begrenzt. Weiter wird über den Antrieb Energie eingetragen, was zu unerwünschten Temperaturerhöhungen führt. Weil nicht angemessene mittlere Verweilzeiten möglich sind, werden basische Alkali-, Erdalkali- und Übergangsmetallhydroxide, -alkoholate, -carbonate, -acetate, -boranate, -phosphate und hydride als Katalysatoren verwendet, um die Reaktionszeiten zu verkürzen. Diese haben jedoch einen ungünstigen Einfluss auf die Qualität des gebildeten Polycarbonats.

Die WO-A 99/28 370 (Hitachi, LTD.) beschreibt eine Reaktor- bzw. Reaktorenvorrichtung aus liegenden zylindrischen Behältern, die mit ein- bzw. zweiwelligen Rührern ausgestattet sind. Sie haben eine gute Kaskadencharakteristik und verringern den technischen Aufwand gegenüber Rührbehälterkaskaden. Nachteilig ist die äußere tragende Konstruktion bei dem einwelligen Rührer, weil dadurch Filmbrücken entstehen, die mit den Filmen auf den Rührblättern abgeschlossene Räume bilden können und dann einen optimalen Abtransport des abgespaltenen Phenols und anderer Produkte beeinträchtigen. Für höhere Viskositäten wird der Einsatz von zweiwelligen Rührern vorgeschlagen. Der einwellige Rührer bildet zu dicke Filme bei höheren Viskositäten. Dadurch wird die Filmoberfläche bzw. Stoffaustauschfläche stark reduziert und der Reaktor arbeitet nicht effektiv. Im Reaktor mit zweiwelligen Rührern wird dieser Mangel durch Rührenergie, die in Knetarbeit umgesetzt wird, gemildert. Es besteht aber weiter der Mangel an einem hohen Verhältnis Oberfläche zu Volumeninhalt. Nachteilig ist auch die durch die Knetarbeit eingetragene Energie, die zu unerwünschten Temperaturerhöhungen führt.

Aus der Literaturstelle: Kunststoffe, Bd. 82, Nr. 1, 1992, Seiten 17 bis 20, ist ein Verfahren, entsprechend dem Oberbegriff des Patentanspruchs 1 bekannt, das jedoch keine speziellen Ausgestaltungshinweise für einen geeigneten Reaktor enthält. Auch aus der Entgegenhaltung GB-A-1 435 767 ist keine dem Erfindungsgegenstand entsprechende

nutzbare Vorrichtung bekannt. Die darin beschriebene Vorrichtung weist Einbauten mit Drahtmaschen auf, welche den besonderen Nachteil haben, dass sich an den Überkreuzungspunkten der Drähte Reaktionsmaterial festsetzen kann, welches dann entweder kristallisieren oder anderweitig degradieren kann.

Das gleiche gilt für die in US 3 684 458 offenbarte Reaktionsapparatur für Polymere. Gemäß dieser Offenbarung wird lediglich der Anstellwinkel benachbarter Scheiben auf den Umfang eines Rotors eines Schreibenreaktors, jeweils zur Rotorachse gesehen, variiert, so dass sich in Bezug auf die am weitesten von der Senkrechten zum Rotor geneigten Umfangspunkte der Scheiben eine schraubenlinienförmige Kontur ergibt. Ferner ist noch aus DE 44 47 422 eine für die aus dem Stand der Technik bekannte Prozessführung grundsätzlich geeignete Form eines Reaktors bekannt, der eine Hohlwelle aufweist, die eine Vielzahl von Durchbrüchen aufweist. Ein solcher Reaktor bedarf aber immer noch eine weiteren Optimierung und Modifizierung hinsichtlich seines inneren Aufbaus, um die eingangs genannten Probleme der Vergilbung des Polycarbonats und die weiteren genannten Nachteile zu vermeiden.

Allen Reaktorvorrichtungen liegt die Aufgabe zugrunde, die für den Reaktionsfortschritt nötige Verweilzeit und Oberfläche bzw. Oberflächenerneuerung bereitzustellen. Für die Oberflächenerneuerung ist besonders bei höheren Viskositäten Knetarbeit erforderlich. Die nötige Verweilzeit wird wesentlich durch Verwendung von Katalysatoren und durch die Größe der Oberfläche bzw. Intensität der Oberflächenerneuerung, über die das Ausdampfen von Phenol und Diarylcarbonat stattfindet, beeinflusst.

Bei Reaktoren mit geringeren Verweilzeiten wird versucht, durch Verwendung basischer Alkali-, Erdalkali- und Übergangsmetallhydroxide, -alkoholate, -carbonate, -acetate, -boranate, -phosphate und hydride als Katalysatoren und gegebenenfalls durch erhöhte Temperaturen die Reaktion zu beschleunigen und z. B. durch intensive Knetarbeit eine ausreichende Oberflächenerneuerung zu bewirken. Der Einsatz dieser Katalysatoren hat aber keinen günstigen Einfluss auf die Qualität des gebildeten Polycarbonats, weil sie im Produkt verbleiben. Erhöhte Temperaturen in Gegenwart der obigen Umesterungskatalysatoren sind besonders nachteilig für die Produktfarbe. Die erforderliche Knetarbeit ist nur durch verstärkte Reaktorkonstruktionen mit starkem Leistungseintrag zu bewirken. Solche Reaktorvorrichtungen können nicht in beliebigen Größen gebaut werden, was sich nachteilig für wirtschaftliche Durchsätze auswirkt.

Die Aufgabe bestand also darin, eine Reaktorkonstruktion zu finden, die einerseits eine besonders gute Ausdampfung von Phenol und gegebenenfalls Diarylcarbonat durch Schaffung großer Schmelzeoberflächen ermöglicht, andererseits aber auch im großtechnischen Maßstab noch wirtschaftlich betrieben werden kann.

Die Aufgabe wurde überraschenderveise durch die Verwendung von Reaktorvorrichtungen gelöst, die unter Schwerkrafteinwirkung ständig freie Filme bilden und eine hohe Filmbildungsrate haben. Das wird mit rotierenden Lochscheiben in Form von Kreisringen erreicht, die ein Verhältnis zwischen Gesamtfläche des Kreisringes zur von den Stegen zwischen den Löchern eingenommenen Fläche von 2,2 bis 6,5, bevorzugt von 2,5 bis 5 haben.

Gegenstand der Erfindung ist ein Verfahren zur Herstellung von Polycarbonaten aus Oligocarbonaten, die durch Umesterung von Diarylcarbonaten mit Diphenolen in Gegenwart von Katalysatoren gewonnen wurden, in dem die Polykondensation bei hohen spezifischen Oberflächen und Filmbildungsraten in einem Reaktor mit einer Vielzahl rotierender Lochscheiben durchgeführt wird, dadurch gekennzeichnet, dass die Lochgrößen der kreisringförmigen Scheibenelemente durch die Formel $A = x(\eta^2/(kg^2\, m^{-5}\, s^{-2}))^{\frac{1}{3}}$ (äquivalenter Lochdurchmesser) bestimmt sind, wobei x zwischen $2 \cdot 10^{-3}$ und $3 \cdot 10^{-2}$, bevorzugt zwischen $4 \cdot 10^{-3}$ und $1{,}6 \cdot 10^{-2}$, variiert und die Kreisringscheiben ein Verhältnis zwischen Gesamtfläche des Kreisringes und der von den Stegen zwischen den Löchern eingenommenen Fläche von 2,2 bis 6,5, bevorzugt 2,5 bis 5, haben.

Es hat sich als günstig erwiesen, die Falllänge der Filme mit der Viskosität ansteigen zu lassen. Der äquivalente Lochdurchmesser A ist hierbei definiert als Durchmesser eines Kreises gleicher Fläche. Der dimensionslose Zahlenfaktor x kann bevorzugt zwischen 0,004 und 0,016 variieren. Die verschiedenen Werte für x können an verschiedenen Stellen einer Reaktionsvorrichtung bei verschiedener Viskosität gleichzeitig angenommen werden. $\eta$ ist die kinematische Schmelzviskosität in Pas.

Die Löcher können in unterschiedlichen geometrischen Formen ausgebildet sein. Bevorzugt sind Löcher in der Form gleichseitiger, drehsymmetrischer n-Ecke, die konstante Stegbreiten der umgrenzenden Metallfläche zulassen, sowie Rechtecke.

An dem inneren und äußeren Rand der Ringscheiben kann von diesen Formen abgewichen werden, um den Rand kreisförmig gestalten zu können. Bei hohen Viskositäten wird der äquivalente Lochdurchmesser so groß, dass eine Aufteilung zwischen dem inneren und äußeren Rand durch Speichen erfolgen muss, gegebenenfalls noch unterteilt durch einen Mittelring. Die Begrenzungen dieser Löcher sind dann die Speichen bzw. Speichenabschnitte und Kreisringabschnitte.

Alle die Löcher umschließenden Metallflächen bzw. Stege sind vorteilhafterweise im Querschnitt Quadrate oder Rechtecke. Durch Wahl der Stegbreiten kann das Verhältnis der die Schmelze beim Auftauchen der Kreisringscheibe aus der Schmelze tragenden Fläche im Verhältnis zum umschließenden Loch optimal in Abhängigkeit der Schmelzeviskosität und sonstiger Eigenschaften der Schmelze abgestimmt werden. Bei einer Kreisringscheibe hat es

sich als günstig erwiesen, alle die Löcher umschließenden Metallflächen bzw. Stege im Querschnitt von konstanter gleicher Abmessung zu wählen.

Bei der Herstellung von verschiedenen Polycarbonaten sind unterschiedliche Viskositätsprofile in der Reaktorvorrichtung zu erwarten. Die Lochscheiben sind gemäß der genannten Beziehung im Reaktor vorzusehen und der Viskositätsentwicklung im Reaktor anzupassen.

Prinzipiell kann die Polykondensation des Oligocarbonats in einem Reaktor durchgeführt werden. Es kann aber zweckmäßig sein, zwei oder mehr Reaktoren hintereinander anzuordnen, weil das zu erreichende Endmolekulargewicht durch das Reaktionsgleichgewicht bestimmt wird, das eine Funktion der Temperatur, des Druckes und der Endgruppengehalte des Polycarbonats ist. Bei zu niedrigen Drucken lassen sich die abzuziehenden Monomeren kaum bis nicht kondensieren, was zu übergroßen und damit teuren Vakuumanlagen führt. Der Vorteil niedriger Drucke ist aber, dass die Reaktionstemperatur, die im Zusammenspiel mit der Verweilzeit qualitätsbestimmend ist, abgesenkt werden kann. Durch eine Aufteilung auf zwei Reaktoren kann die Gasbelastung für Vakuumanlagen und die Temperaturbelastung für das Produkt optimiert werden.

Die Rohrleitungen zwischen den Apparaten sollten so kurz wie möglich sein und die Krümmungen der Leitungen so gering wie möglich gehalten werden. Dabei sind die äußeren Rahmenbedingungen des Anlagenaufbaus zu berücksichtigen.

Es wurde gefunden, dass eine besonders bevorzugte Reaktorvorrichtung für die Polykondensation von Oligocarbonaten ein horizontaler zylindrischer Behälter mit einer Rührvorrichtung, wie in der DE 44 47 422 C2 (Karl Fischer Industrieanlagen GmbH) Spalte 1, Zeile 63 bis Spalte 7, Zeile 39 beschrieben, ist. Dieser Reaktor hat nicht die Nachteile der zuvor beschriebenen Reaktorvorrichtungen und kann für sehr hohe Durchsätze gebaut werden.

Von besonderem Vorteil ist die überaus steife Konstruktion und Ausbildung des die Lochscheiben tragenden Zylinders, der die Welle des Reaktors darstellt. Der Zylinder ist ebenfalls mit Öffnungen bzw. Löchern versehen, so dass die entstehenden Dämpfe ungehindert abströmen können. Die Art der Lagerung des Rotors erlaubt den Reaktor mit unterschiedlichen Temperaturenzonen zu betreiben und so ein für den Reaktionsverlauf angepasstes Temperaturprofil einzustellen. Die Konstruktion erlaubt weiter, das Mitschleppen von höherviskosen Schmelzen beim Drehen des Rotors durch Einbau von Statoren, die zwischen die Scheiben hineinragen, zu begrenzen. Durch diese Maßnahme wird besonders im höherviskosen Bereich das Verhältnis Schmelzeoberfläche zu Schmelzevolumen auf der Scheibe optimiert.

Für einen optimalen und damit bevorzugten Einsatz der in der DE 44 47 422 C2 dargestellten Reaktorvorrichtung für die Herstellung Polycarbonaten sind jedoch noch weitere Modifikationen gegenüber den in der genannten Anmeldung dargestellten Konstruktionen nötig.

So kann es sein, dass bei den geringen Viskositäten am Eintritt der Reaktorvorrichtung eine unzureichende Benetzung der rotierenden Kreisscheibe gegeben ist. Es hat sich als vorteilhaft erwiesen, die ersten Ringscheiben, gegebenenfalls bis zur Hälfte der Reaktorlänge am äußeren Umfang mit Schöpfelementen derart auszustatten, dass beim Aufsteigen der Schöpfelemente gezielt die Kreisscheibe kontinuierlich mit der dünnflüssigen Schmelze bespült wird.

Im Bereich hoher Viskositäten, zum Ende des Reaktors, kann eine übermäßige Mitnahme von Produkt durch die rotierende Kreisscheibe zu unerwünschten Zuständen führen, wie z. B. Störungen bei der Filmbildung. Eine gegenüber der DE 44 47 422 C2 verbesserte Methode, dies zu verhindern, ist die Anbringung von waagerechten Abstreifbalken an den Statoren auf Höhe des Sumpfspiegels. Ein Zusammenlaufen der Schmelze hinter diesem Balken in Drehrichtung des Rotors wird damit vermieden. Diese Balken können direkt am Gehäuse angebracht sein oder durch gegebenenfalls zusätzliche Balken abgestützt werden, die ebenfalls an der Wand des Reaktors befestigt sind. Eine förderaktive Ausführung der Abstreifbalken und/oder Stützbalken kann, wie in der DE 44 47 422 C2 beschrieben, hierfür gewählt werden. Sie ist für die Unterstützung des Schmelzetransports zum Reaktoraustritt hin von besonderer Bedeutung und vorteilhaft.

Für den Fortschritt der Reaktion und die Qualität des erhaltenen Produktes ist es günstig, den Reaktor in mehrere, scheibenförmige Zonen einzuteilen, die voneinander getrennt beheizt werden können, so dass ein Temperaturprofil, angepasst an die Molekulargewichtsentwicklung, gefahren werden kann. Die Temperaturbelastung des Polycarbonats kann somit minimiert werden, was sich im Allgemeinen positiv auf die Eigenschaften wie z.B. die Farbe des Polycarbonats auswirkt.

Eine weitere Möglichkeit ist, den Brüden- bzw. Gasbereich und den darunter liegenden Schmelze- bzw. Sumpfbereich verschieden zu beheizen. So ist es vorteilhaft, den oberen Gasbereich weniger hoch als den Schmelzebereich darunter zu erwärmen. Mögliche Polycarbonatfilme an den Wandungen im Gasbereiches verweilen lange und werden durch geringere Temperaturen weniger geschädigt. Dazu kann vorteilhafterweise die Heizung der Sektionen des Reaktors entsprechend horizontal getrennt werden. Diese Maßnahme bewirkt höhere Laufzeiten der Reaktoren, weniger Stippenbildung durch vercrackte Produkte und bessere Farben der Endprodukte.

Die Prozesstemperaturen für die Polykondensation liegen dabei allgemein zwischen 250 bis 330°C, vorzugsweise 260 bis 310°C, die Drucke zwischen 0,01 bis 15 mbar, vorzugsweise 0,05 bis 10 mbar und die mittleren Verweilzeiten betragen 30 bis 240 Minuten, vorzugsweise 60 bis 180 Minuten.

Liegen die Temperaturen der Oligocarbonatschmelzen, die in den Reaktor eingetragen werden, merklich unter den gewünschten Betriebstemperaturen des Reaktors, kann es zweckmäßig sein, die Schmelze vor Eintritt in den

Reaktor durch für Polymerschmelzen geeignete Wärmetauscher aufzuheizen. Dadurch können die Temperaturdifferenzen zwischen Heizmittel und Produkt im Reaktor abgesenkt werden, um eine Produktschädigung an den Wandungen des Reaktors zu vermeiden.

Erfindungsgemäß erfolgt der Eintritt des Produktes in die Reaktionsvorrichtung über eine Ventil mit automatischer Druckregelung in der Art, dass eine direkte Entspannung in den Produktraum an der Eintrittsseite des Reaktors erfolgt. Durch das hohe Wärmepotential der direkten Umgebung werden Abkühleffekte vermieden, die Nachteile hinsichtlich von Partikelgehalten kristalliner Art haben können. Dazu werden die Produkteintrittsventile beispielsweise an der Stirnseite des Reaktors angebracht.

Vorteilhaft ist, die Brüdenabgänge am Reaktor in Drehrichtung des Rotors um 15° bis 60° aus der Senkrechten zu verlegen, um den Rückfluss von Schmelzen zu reduzieren.

Zur Herstellung und Fertigung der Reaktoren sowie auch der Wärmetauscher können alle üblichen Werkstoffe, die keine direkte Produktschädigung bewirken, verwendet werden. Es wurde jedoch gefunden, dass die Verwendung von Werkstoffen mit weniger als 2 % Eisen, einem Nickelgehalt zwischen 56 und 60 % und einem Chromgehalt zwischen 22 und 24 % vorteilhaft für die Produktqualität ist. Bevorzugt wird der Werkstoff 2.4605 nach DIN eingesetzt.

Überraschend wurde gefunden, dass die Verwendung der dargestellten Reaktorvorrichtung besonders gut geeignet ist, um aus Oligocarbonaten, wie sie beispielsweise nach der in deutschen Anmeldung mit der Anmeldenummer 1 01 14 808.9 dargestellten Verfahrensweise durch Umesterung von Diarylcarbonaten mit Diphenolen in Gegenwart von Katalysatoren hergestellt werden, technisch gebrauchsfähige Polycarbonate mit sehr hoher Qualität zu erzeugen. Besonders überraschend sind die sehr guten Farbenqualitäten der erhaltenen Polycarbonate.

Das Schmelzumesterungsverfahren geht bekanntlich von Dihydroxyverbindungen, Kohlensäurediestern und gegebenenfalls Verzweigern und/oder Monophenolen aus.

Für die Herstellung der Oligomeren geeignete Dihydroxyverbindungen sind solche der Formel (I)

HO-Ar-OH (I)

in denen Ar ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyverbindungen der Formel (I) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.
Diese und weitere geeignete andere Diphenole sind z. B. in den US-PS 3 028 365, 3 148 172, 3 275 601, 2 991 273, 3 271 367, 3 062 781, 2 970 131 und 2 999 846, in den DE-A 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964" beschrieben.

Bevorzugte Diphenole sind beispielsweise:

4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
$\alpha,\alpha$-Bis-(4-hydroxyphenyl)-p-diisopropylbenzol,
$\alpha,\alpha$-Bis-(4-hydroxyphenyl)-m-diisopropylbenzol,
Bis-(4-hydroxyphenyl)sulfon,
Bis-(4-hydroxyphenyl)methan,
1,1-Bis-(4-hydroxyphenyl)-3,3,5-trimethylcyclohexan,
Bis-(2,6-dimethyl-4-hydroxyphenyl)propan,

Bis-(4-hydroxyphenyl)hexafluorpropan,
(4-Hydroxyphenyl)-1-phenylethan,
(4-Hydroxyphenyl)diphenylmethan,
Dihydroxydiphenylether,
4,4'-Thiobisphenol,
Bis-(4-Hydroxyphenyl)-1-(1-naphthyl)ethan,
Bis-(4-Hydroxyphenyl)-1-(2-naphthyl)ethan,
Dihydroxy-3-(4-hydroxyphenyl)-1,1,3-trimethyl-1*H*-inden-5-ol,
Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol.
Besonders bevorzugt sind
Resorcin,
Bis-(4-Hydroxyphenyl)-1-(1-naphthyl)ethan,
Bis-(4-Hydroxyphenyl)-1-(2-naphthyl)ethan,
2,2-Bis-(4-hydroxyphenyl)propan,
α,α'-Bis-(4-hydroxyphenyl)-p-diisopropylbenzol,
α,α'-Bis-(4-hydroxyphenyl)-m-diisopropylbenzol,
1,1-Bis-(4-hydroxyphenyl)cyclohexan,
Bis-(4-hydroxyphenyl)-3,3,5-trimethylcyclohexan,
Bis-(4-Hydroxyphenyl)diphenylmethan.
Ganz besonders bevorzugt
Bis-(4-hydroxyphenyl)-3,3,5-trimethylcyclohexan,
4,4'-Dihydroxydiphenyl,
2,2-Bis-(4-hydroxyphenyl)propan.

Es können sowohl ein Diphenol der Formel (I) unter Bildung von Homooligocarbonaten als auch mehrere Diphenole der Formel (I) unter Bildung von Cooligocarbonaten verwendet werden.

Kohlensäurediester sind solche Diarylester der Formel (II)

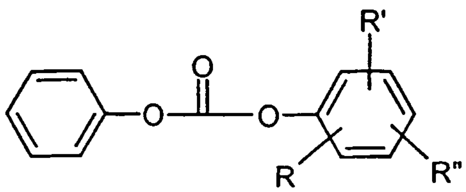

(II)

und Formel (III),

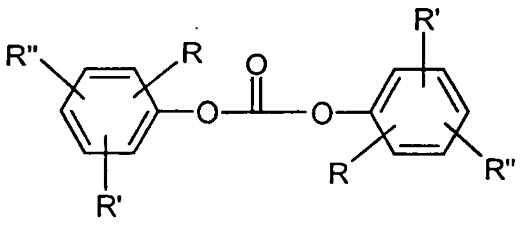

(III)

wobei R, R' und R" unabhängig voneinander H, gegebenenfalls verzweigte $C_1$-$C_{34}$-Alkyl/Cycloalkyl, $C_7$-$C_{34}$-Alkaryl oder $C_6$-$C_{34}$-Aryl darstellen können, beispielsweise Diphenylcarbonat,
Butylphenyl-phenylcarbonat,
Di-Butylphenylcarbonat,
Isobutylphenyl-phenylcarbonat,
Di-Isobutylphenylcarbonat,

tert-Butylphenyl-phenylcarbonat,
Di-tert-Butylphenylcarbonat,
n-Pentylphenyl-phenylcarbonat,
Di-(n-Pentylphenyl)carbonat,
n-Hexylphenyl-phenylcarbonat,
Di-(n-Hexylphenyl)carbonat,
Cyclohexylphenyl-phenylcarbonat,
Di-Cyclohexylphenylcarbonat,
Phenylphenol-phenylcarbonat,
Di-Phenylphenolcarbonat,
Isooctylphenyl-phenylcarbonat,
Di-Isooctylphenylcarbonat,
n-Nonylphenyl-phenylcarbonat,
Di-(n-Nonylphenyl)carbonat,
Cumylphenyl-phenylcarbonat,
Di-Cumylphenylcarbonat,
Naphthylphenyl-phenylcarbonat,
Di-Naphthylphenylcarbonat,
Di-tert-Butylphenyl-phenylcarbonat,
Di-(Di-tert-Butylphenyl)carbonat,
Dicumylphenyl-phenylcarbonat,
Di-(Dicumylphenyl)carbonat,
4-Phenoxyphenyl-phenylcarbonat,
Di-(4-Phenoxyphenyl)carbonat,
3-Pentadecylphenyl-phenylcarbonat,
Di-(3-Pentadecylphenyl)carbonat
Tritylphenyl-phenylcarbonat,
Di-Tritylphenylcarbonat,
bevorzugt
Diphenylcarbonat,
tert-Butylphenyl-phenylcarbonat,
Di-tert-Butylphenylcarbonat,
Phenylphenol-phenylcarbonat,
Di-Phenylphenolcarbonat,
Cumylphenyl-phenylcarbonat,
Di-Cumylphenylcarbonat,
besonders bevorzugt Diphenylcarbonat.

Daneben können die als Carbonate eingesetzten phenolischen Verbindungen auch direkt als Hydroxyaryle neben einem der genannten Carbonate verwendet werden, um die Endgruppe des Polycarbonats zu beeinflussen. Bevorzugte Mischungen sind solche mit Diphenylcarbonat. Es besteht die Möglichkeit, das Hydroxyaryl oder die hydroxyaryltragende Verbindung zu jedem Zeitpunkt der Reaktion zuzugeben, bevorzugt zu Beginn der Reaktion, und die Zugabe kann in mehrere Portionen aufgeteilt werden. Der Anteil an freiem Hydroxyaryl kann 0,4 - 17 mol%, bevorzugt 1,3 - 8,6 mol% (bezogen auf die Dihydroxyverbindung) betragen. Dabei kann die Zugabe sowohl vor der Reaktion als auch ganz oder teilweise während der Reaktion erfolgen.

Bezogen auf ein Mol Bisphenol werden die Kohlensäurediester in 1,02 bis 1,30 Mol, bevorzugt 1,04 bis 1,25 Mol eingesetzt, besonders bevorzugt 1,06 - 1,20 Mol. Es können auch Mischungen der oben genannten Kohlensäurediester eingesetzt werden.

Für die Synthese werden Ammonium- oder Phosphoniumkatalysatoren eingesetzt, die für die Zwecke dieser Anmeldung gemeinsam auch als Oniumverbindungen bezeichnet werden. Sie werden bevorzugt in Mengen von $10^{-8}$ bis $10^{-3}$ Mol, bezogen auf ein Mol Bisphenol, besonders bevorzugt in Mengen von $10^{-7}$ bis $10^{-4}$ Mol, eingesetzt.

Als Katalysator für die Herstellung der Oligocarbonate können Phosphoniumsalze verwendet werden, gegebenenfalls in Kombination mit anderen geeigneten Katalysatoren, wie z.B. andere Oniumverbindungen, Alkali- oder Erdalkalimetallverbindungen.

Phosphoniumsalze sind solche der Formel (IV),

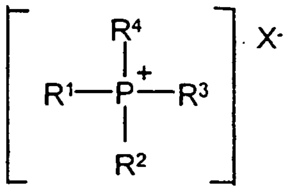

(IV)

wobei $R^{1-4}$ dieselben oder verschiedene $C_1$-$C_{10}$-Alkyle, $C_6$-$C_{10}$-Aryle, $C_7$-$C_{10}$-Aralkyle oder $C_5$-$C_6$-Cycloalkyle sein können, bevorzugt Methyl oder $C_6$-$C_{14}$-Aryle, besonders bevorzugt Methyl oder Phenyl, und $X^-$ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R $C_6$-$C_{14}$-Aryl oder $C_7$-$C_{12}$-Aralkyl, bevorzugt Phenyl, sein kann. Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Bevorzugte Mengen an Phosphoniumsalzkatalysatoren sind $10^{-2}$ bis $10^{-8}$ Mol pro Mol Diphenol und die am meisten bevorzugten Katalysatormengen sind $10^{-4}$ bis $10^{-6}$ Mol pro Mol Diphenol. Weitere Cokatalysatoren können gegebenenfalls zusätzlich zu dem Phosphoniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 2.000 ppb, vorzugsweise 5 bis 1.000 ppb und am meisten bevorzugt 10 bis 500 ppb liegen, jeweils berechnet als Natrium. Diese können schon bei der Herstellung der Oligocarbonate eingesetzt oder aber auch erst vor der Polykondensation zugemischt werden.

Die Oligocarbonate können gezielt verzweigt sein und können daher geringe Mengen von 0,02 bis 3,6 mol% (bezogen auf die Dihydroxyverbindung) an Verzweigern enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Die Oligocarbonate sind die Ausgangsprodukte für die Polykondensation zu Polycarbonaten. Vor der Aufkondensation können zur Korrektur des Endgruppenverhältnisses von phenolischen OH-Endgruppen zu Arylcarbonat-Endgruppen Arylcarbonate oder Diphenole zugemischt werden, um im fertigen Polycarbonat gezielt das gewünschte und angestrebte Endgruppenverhältnis zu erreichen. Durch Zumischen substituierter Monophenole, gegebenenfalls auch deren Diarylcarbonate, kann die Phenylcarbonat-Endgruppe partiell verändert werden.

Zur Änderung der Eigenschaften der Polycarbonate können den Oligocarbonaten vor der Synthese zu hochmolekularen Polycarbonaten Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z. B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben.

## Beispiel

Oligocarbonatschmelze, hergestellt aus Bispenol A und Diphenylcarbonat mit Tetraphenylphosphoniumphenolat Katalysator, mit der rel. Viskosität von 1,081, einem OH-Endgruppengehalt von 0,55 % und einer Temperatur von 270°C werden in einen Reaktor, wie zuvor beschrieben, über eine Druckhaltung eingespeist. Der Reaktor ist auf 270°C aufgeheizt und steht unter einem Vakuum von 7,3 mbar. Die Rotordrehzahl ist 2,5 Upm; die mittlere Verweilzeit beträgt 45 Minuten. Das mittels einer Zahnradpumpe aus dem Reaktor kontinuierlich entnommene Produkt hat eine rel. Viskosität von 1,171 mit einem OH-Endgruppengehalt von 0,13 % und wird über einen mit 295°C heißem Wärmeträgeröl beheizten Wärmetauscher in einen weiteren Reaktor, wie zuvor beschrieben, aber für höhere Schmelzviskositäten ausgestaltet, gefördert. Der Brüdenstrom wird partiell kondensiert, der Rest wird in der Vakuumstation aufgenommen.

Der zweite Reaktor ist auf 295°C temperiert und steht unter einem Vakuum von 1,3 mbar. Die Rotordrehzahl ist 0,8 Upm; die mittlere Verweilzeit beträgt 130 Minuten. Die Brüden werden in die Vakuumstation abgeleitet. Das mittels einer Zahnradpumpe kontinuierlich entnommene Polycarbonat hat eine rel. Viskosität von 1,287 und einen OH-Endgruppengehalt von 290 ppm. An dem Polycarbonat wird der YI-Wert bestimmt. Er liegt bei 1,42.

YI wurde **nach ASTM E 313** an spritzgegossenen Proben einer Dicke von 4 mm bestimmt. Die Verspritzungstemperatur war 300°C.

## Patentansprüche

1. Verfahren zur Herstellung von Polycarbonaten aus Oligocarbonaten, die durch Umesterung von Diarylcarbonaten mit Diphenolen in Gegenwart von Katalysatoren gewonnen wurden, in dem die Polykondensation bei hohen spezifischen Oberflächen und Filmbildungsraten in einem Reaktor mit einer Vielzahl rotierender Lochscheiben durchgeführt wird, **dadurch gekennzeichnet, dass** die Lochgrößen der kreisringförmigen Scheibenelemente durch die Formel $A = x\left(\eta^2 / \left(kg^2\ m^{-5}\ s^{-2}\right)\right)^{\frac{1}{3}}$ bestimmt sind, wobei x zwischen $2 \cdot 10^{-3}$ und $3 \cdot 10^{-2}$, bevorzugt zwischen $4 \cdot 10^{-3}$ und $1{,}6 \cdot 10^{-2}$, variiert und die Kreisringscheiben ein Verhältnis zwischen Gesamtfläche des Kreisringes und von den Stegen zwischen den Löchern eingenommenen Fläche von 2,2 bis 6,5, bevorzugt von 2,5 bis 5, haben.

2. Verfahren nach Anspruch 1, **dadurch gekennzeichnet, dass** die die Löcher der Kreisringscheibe umschließenden Metallflächen im Querschnitt Quadrate oder Rechtecke mit konstanter Abmessung pro Scheibe sind.

3. Verfahren nach einem der Ansprüche 1 oder 2, **dadurch gekennzeichnet, dass** die Lochgrößen und Stegbreiten im Reaktor vom Eintritt zum Austritt hin gemäß Anspruch 2 dem Viskostätsanstieg angepasst sind.

4. Verfahren nach Anspruch 1, **dadurch gekennzeichnet, dass** eine Reaktorvorrichtung gemäß DE 44 47 422 C2, Spalte 1, Zeile 63 bis Spalte 7, Zeile 39 benutzt wird.

5. Verfahren nach einem der Ansprüche 1 bis 4, **dadurch gekennzeichnet, dass** im Bereich niedriger Viskositäten im Reaktor Schöpfelemente vorhanden sind, die die kreisringförmigen Scheibenelemente während der Rotation nachbenetzen.

6. Verfahren nach einem der Ansprüche 1 bis 5, **dadurch gekennzeichnet, dass** im höherviskosen Bereich im Reaktor die Statoren mit waagerechten Querbalken bestückt und zwischen den kreisförmigen Scheibenelementen angebracht sind.

7. Verfahren nach einem der Ansprüche 1 bis 6, **dadurch gekennzeichnet, dass** die Beheizung des Reaktors in senkrechte, scheibenförmige Zonen aufgeteilt ist, um ein Temperaturprofil einstellen zu können.

8. Verfahren nach einem der Ansprüche 1 bis 7, **dadurch gekennzeichnet, dass** die Beheizung der einzelnen Sektionen des Reaktors so horizontal getrennt ist, dass der Brüdenraum und der Sumpfraum mit unterschiedlichen Temperaturen betrieben werden kann.

9. Verfahren nach einem der Ansprüche 1 bis 8, **dadurch gekennzeichnet, dass** die Oligomerschmelze vor Eintritt in den Reaktor über einen Wärmetauscher aufgeheizt wird.

10. Verfahren nach einem der Ansprüche 1 bis 9, **dadurch gekennzeichnet, dass** das Produkteintrittsventil so in die Stirnplatte des Reaktors eingesetzt ist, dass die Entspannung der Schmelze im Reaktorraum erfolgt.

11. Verfahren nach einem der Ansprüche 1 bis 10, **dadurch gekennzeichnet, dass** der Brüdenabgang am Reaktor in Drehrichtung des Rotors um zwischen 15° und 60° aus der Senkrechten angebracht ist.

12. Verfahren nach einem der Ansprüche 1 bis 11, **dadurch gekennzeichnet, dass** alle produktberührten Teile des Reaktors aus einer Legierung mit einem Eisengehalt von weniger als zwei Prozent, einem Nickelgehalt zwischen 56 und 60 Prozent und einem Chromgehalt zwischen 22 und 24 Prozent, bevorzugt dem Werkstoff 2.4605 gefertigt sind.

## Claims

1. Process for the preparation of polycarbonates from oligocarbonates which have been obtained by transesterification of diaryl carbonates with diphenols in the presence of catalysts, in which process the polycondensation is carried out with high specific surface areas and film-forming rates in a reactor having a plurality of rotating perforated disks, **characterised in that** the sizes of the holes in the annular disk elements are determined by the formula

$$A = x\left(\eta^2 / \left(kg^2\ m^{-5}\ s^{-2}\right)\right)^{\frac{1}{3}}$$

wherein x varies from $2.10^{-3}$ to $3.10^{-2}$, preferably from $4.10^{-3}$ to $1.6.10^{-2}$, and the annular disks have a ratio of the total surface area of the circular ring to the area occupied by the webs between the holes of from 2.2 to 6.5, preferably from 2.5 to 5.

2. Process according to claim 1, **characterised in that** the metal surfaces surrounding the holes in the annular disk are square or rectangular in cross-section with constant dimensions per disk.

3. Process according to either claim 1 or claim 2, **characterised in that** the sizes of the holes and the widths of the webs in the reactor are adapted to the increase in viscosity from the inlet to the outlet according to claim 2.

4. Process according to claim 1, **characterised in that** a reactor device according to DE 44 47 422 C2, column 1, line 63 to column 7, line 39 is used.

5. Process according to any one of claims 1 to 4, **characterised in that** scoop elements are present in the reactor in the low viscosity region which wet the annular disk elements during rotation.

6. Process according to any one of claims 1 to 5, **characterised in that**, in the higher viscosity region of the reactor, the stators are equipped with horizontal cross-beams and are arranged between the circular disk elements.

7. Process according to any one of claims 1 to 6, **characterised in that** the heating of the reactor is divided into vertical, disk-shaped zones in order to be able to establish a temperature profile.

8. Process according to any one of claims 1 to 7, **characterised in that** heating of the individual sections of the reactor is separated horizontally in such a manner that the vapour chamber and the sump chamber can be operated at different temperatures.

9. Process according to any one of claims 1 to 8, **characterised in that** the oligomer melt is heated by means of a heat exchanger before it enters the reactor.

10. Process according to any one of claims 1 to 9, **characterised in that** the product inlet valve is set into the end plate of the reactor in such a manner that decompression of the melt takes place in the reactor chamber.

11. Process according to any one of claims 1 to 10, **characterised in that** the vapour outlet is provided on the reactor from 15° to 60° from the vertical in the direction of rotation of the rotor.

12. Process according to any one of claims 1 to 11, **characterised in that** all parts of the reactor that come into contact with product are manufactured from an alloy having an iron content of less than two percent, a nickel content of from 56 to 60 percent and a chromium content of from 22 to 24 percent, preferably from the material 2.4605.

## Revendications

1. Procédé de préparation de polycarbonates à partir d'oligocarbonates, qui ont été obtenus par transestérification de carbonates diaryliques avec des diphénols en présence de catalyseurs, dans lequel la polycondensation est réalisée avec des surfaces spécifiques et des taux de formation de film élevés dans un réacteur doté d'une multitude de disques en rotation, **caractérisé en ce que** les grosseurs des trous des éléments de disques annulaires sont déterminées par la formule $A = x(\eta^2/(kg^2\ m^{-5}\ s^{-2}))^{1/3}$, dans laquelle x varie entre $2 \cdot 10^{-3}$ et $3 \cdot 10^{-2}$, de préférence

entre $4 \cdot 10^{-3}$ et $1;6 \cdot 10^{-2}$, et les disques annulaires présentent un rapport entre la surface totale de l'anneau et la surface occupée par les ponts entre les trous de 2,2 à 6,5, de préférence de 2,5 à 5.

2. Procédé selon la revendication 1, **caractérisé en ce que** les surfaces métalliques entourant les trous du disque annulaire présentent une section transversale carrée ou rectangulaire de dimensions constantes par disque.

3. Procédé selon une des revendications 1 ou 2, **caractérisé en ce que** les grosseurs des trous et les largeurs des ponts dans le réacteur sont adaptées à l'augmentation de la viscosité depuis l'entrée jusqu'à la sortie conformément à la revendication 2.

4. Procédé selon la revendication 1, **caractérisé en ce que** l'on utilise un dispositif à réacteur conforme au document DE 44 47 422 C2, colonne 1, ligne 63 jusqu'à colonne 7, ligne 39.

5. Procédé selon une des revendications 1 à 4, **caractérisé en ce que** dans la zone de basse viscosité dans le réacteur, des éléments à cuiller sont installés et humidifient davantage les éléments de disque annulaire pendant la rotation.

6. Procédé selon une des revendications 1 à 5, **caractérisé en ce que** dans la zone de viscosité plus élevée du réacteur, les stators sont dotés de profilés racleurs horizontaux, aménagés entre les éléments de disques annulaires.

7. Procédé selon une des revendications 1 à 6, **caractérisé en ce que** le chauffage du réacteur peut être réparti en zones verticales, en forme de disque, afin de pouvoir ajuster un profil de température.

8. Procédé selon une des revendications 1 à 7, **caractérisé en ce que** le chauffage des différentes sections du réacteur est séparé horizontalement de telle manière que l'espace des buées et l'espace de fond peuvent être opérés à des températures différentes.

9. Procédé selon une des revendications 1 à 8, **caractérisé en ce que** la masse fondue d'oligomère est chauffée avant l'entrée dans le réacteur par l'intermédiaire d'un échangeur de chaleur.

10. Procédé selon une des revendications 1 à 9, **caractérisé en ce que** la soupape d'entrée du produit est positionnée dans la plaque frontale du réacteur de manière telle que la détente de la masse fondue a lieu dans le réacteur.

11. Procédé selon une des revendications 1 à 10, **caractérisé en ce que** la sortie des buées dans le réacteur est aménagée entre 15 et 60° par rapport à la verticale dans le sens de rotation du rotor.

12. Procédé selon une des revendications 1 à 11, **caractérisé en ce que** les éléments du réacteur entrant en contact avec le produit sont fabriqués avec un alliage possédant une teneur en fer inférieure à 2%, une teneur en nickel comprise entre 56 et 60 % et une teneur en chrome se situant entre 22 et 24 %, de préférence avec le matériau 2.4605.